Europäisches Patentamt

European Patent Office

Office européen des brevets

(19)

(11) Veröffentlichungsnummer: **0 211 378**
A2

(12) **EUROPÄISCHE PATENTANMELDUNG**

(21) Anmeldenummer: 86110416.4

(22) Anmeldetag: 28.07.86

(51) Int. Cl.⁴: **F 16 B 12/04**

(30) Priorität: 30.07.85 DE 3527231
13.08.85 DE 3529009
10.10.85 DE 3536152
23.12.85 DE 8536350 U

(43) Veröffentlichungstag der Anmeldung:
25.02.87 Patentblatt 87/9

(84) Benannte Vertragsstaaten:
AT BE CH FR GB IT LI LU NL SE

(71) Anmelder: Fischer, Walter
Rationalstrasse 4
D-4520 Melle 7(DE)

(72) Erfinder: Fischer, Walter
Rationalstrasse 4
D-4520 Melle 7(DE)

(74) Vertreter: Schirmer, Siegfried
Osningstrasse 10
D-4800 Bielefeld 1(DE)

(54) **Verbindungselement zur unsichtbaren Verbindung von Teilen, insbesondere flächigen Teilen bei Möbeln.**

(57) Die mit einem Außengewinde versehenen Verankerungsteile eines Verbindungselements besitzen unterschiedliche Länge, wobei das Außengewinde des kürzeren Verankerungsteils gegenüber dem Außengewinde des längeren Verankerungsteils eine größere Gewindesteigung aufweist. Das Außengewinde des längeren Verankerungsteils ist an mehreren Stellen in Längsrichtung durchlaufend unterbrochen, so daß längsverlaufende Außengewindeteile gebildet sind.

Das Verbindungselement 15 weist eine durchgehende Längsbohrung 5 auf. Damit besteht die Möglichkeit, daß der in die zylindrische Bohrung eines Teils eingebrachte Klebstoff in den anderen Teil überführt wird.

Erfindungsgemäß kann äußerst schnell eine völlig dichte Verriegelungsverbindung zwischen den zu verbindenden Möbelteilen hergestellt werden.

FIG. 7

Patentanwalt

**Dipl.-Ing. Siegfried Schirmer**

Zugelassener Vertreter
vor dem Europäischen Patentamt

0211378.

Anmelder:
Walter Fischer
Rationalstraße 4
4520 Melle 7

**Verbindungselement zur unsichtbaren Verbindung von Teilen, insbesondere flächigen Teilen bei Möbeln**

Die Erfindung betrifft ein Verbindungselement zur unsichtbaren Verbindung von Teilen, insbesondere flächigen Teilen bei Möbeln nach den Merkmalen des Oberbegriffs des Hauptanspruchs.

Zur unsichtbaren Verbindung von flächigen Teilen bei Möbeln, z.B. zur rechtwinkligen Verbindung einer Seitenwand eines Möbelkorpus mit dem Unterboden, sind bereits aus der DE-PS 34 08 786 Verbindungselemente bekannt, bei denen von beiden Stirnseiten aus je eine Längsbohrung eingebracht ist, an deren Enden eine oder mehrere durchgehende Querbohrungen angeordnet ist bzw. sind. Die bekannten Verbindungselemente werden in vorbereitete zylindrische Bohrungen der zu verbindenden Teile eingeführt, wobei in diese Bohrungen zuvor ein Klebstoff eingebracht ist. Zur Herstellung der Verbindung wird das Verbindungselement teilweise in die vorbereitete zylindrische Bohrung der Seitenwand eines Möbelkorpus eingedrückt oder eingeschlagen. Danach wird der anzuschließende Ober- oder Unterboden des Möbelkorpus angeschlossen, in dem das noch freie Ende des Verbindungselements in eine ebenfalls vorbe-

- 2 -

reitete zylindrische Bohrung des Ober- oder Unterbodens eingesetzt und anschließend der Ober- oder Unterboden fest gegen die Seitenwand gedrückt bzw. gepreßt wird.

Die bei den bekannten Verbindungselementen vorhandenen Längs- und Querbohrungen tragen zur Aufquellung des Verbindungselements und zur Verteilung des Klebstoffs bei. Der Klebstoff dringt jeweils beidseitig in die an den Stirnseiten offene Längsbohrung ein und tritt durch die Querbohrungen an mindestens zwei Stellen wieder aus dem Verbindungselement aus. Voraussetzung hierfür ist, daß in jedes zylindrische Bohrloch der beiden zu verbindenden Möbelteile Klebstoff eingebracht ist.

Dieser Klebstoff kann auf die gesamte Länge der zylindrischen Bohrung verteilt eingebracht sein oder auch in Form von sogenannten Leimperlen nach dem DE-PSen 33 09 953 und 33 16 855. Diese Leimperlen ermöglichen das Einbringen von Leim in die Bohrlöcher ohne Gefahr der Verunreinigung der Oberfläche der zu verbindenden Teile. Bei den Leimperlen ist ein klebendes bzw. haftendes und/oder aufschäumendes Mittel hermetisch in eine Hülle eingeschlossen, die als selbständiger Teil in das Bohrloch einbringbar ist. Die den Klebstoff enthaltende Hülle ist direkt oder indirekt über Klemmorgane im Bohrloch festgeklemmt. Durch die Verwendung der Leimperlen ist die Möglichkeit gegeben, den Klebstoff zeitlich unabhängig von der eigentlichen Verbindung der flächigen Teile in das Bohrloch einzubringen. Der in die Hülle eingebrachte und darin hermetisch abgeschlossene Klebstoff ist für den jeweiligen Verwendungszweck dosiert und über einen längeren Zeitraum, der Jahre betragen kann, lagerfähig. Die überwiegend zur Verwendung gelangenden Leimperlen besitzen eine zylindrische Form mit einer stirnseitigen Abdeckung, wobei die Abdeckung über die zylindrische Wandung der Leimperle auskragt und als Klemmorgan für das Verklemmen der Leimperle im Bohrloch dient. Die stirnseitige Abdeckung wird nach dem Einfüllen des Klebemittels in die zylindrische Hülle der Leimperle aufgeschweißt.

Die Stirnseiten der Verbindungselemente sind spitz verlaufend ausgebildet oder weisen eine Spitze auf, wodurch das Zerstören der den Klebstoff enthaltenden flexiblen Hüllen der Leimperlen erleichtert wird. Dabei treffen die Spitzen annähernd mittig auf die Abdeckung der Leimperlen auf. Die schwächste Stelle zur Zerstörung der Leimperle ist jedoch die Schweißstelle zwischen Abdeckung und Wandung, die durch die Spitze des Verbindungselements nicht angegriffen wird. Außerdem hat sich im praktischen Einsatz herausgestellt, daß bei einer maschinellen Einbringung der Verbindungselemente die Spitzen teilweise hinderlich sind. So ist nicht auszuschließen, daß sich die Spitzen in den Längs- und Querbohrungen benachbarter Verbindungselemente verhaken.

Zur besseren Ausnutzung der Quellfähigkeit des Verbindungselements und damit zur Erreichung einer schnellen und sicheren Verbindung zwischen den zu verbindenden Teilen ist es aus der DE-PS 33 20 184 bereits bekannt, das Verbindungselement durch Zusammenpressen eines größeren zylindrischen Rohlings zu bilden, wobei gleichzeitig die äußeren Profilierungen mit eingepreßt werden. Bei diesen Profilierungen handelt es sich u.a. um auf der Wandung längsverlaufende Nuten, über die der Klebstoff über die Länge des Verbindungselements verteilt wird. Das Einpressen von Profilierungen erfolgte bisher ausschließlich auf der Mantelfläche des Verbindungselements, während die Spitze auf der Stirnseite durch Entfernen von Material gebildet wurde.

Bei diesen bekannten Verbindungselementen läßt sich eine dichte Verbindung nur durch Verwendung besonderer Hilfsmittel herstellen, wobei die Profilierungen auf der Außenseite primär zur Erhöhung der Verbundwirkung, nicht aber zur Erzielung einer dichten Verriegelungsverbindung dienen. Im allgemeinen müssen die Hilfsmittel die zu verbindenden Teile zur Erzielung einer dichten Verbindung so lange aneinanderpressen, bis die Verbundwirkung eingetreten ist.

Es ist des weiteren ein Verbindungselement bekannt, mit dem ohne zusätzliche Hilfsmittel eine dichte Verriegelungsverbindung herstellbar ist. Die Verankerungsteile des Verbindungselements besitzen hierzu zueinander gegenläufige mehrgängige Außengewinde mit identischen Gewindesteigungen auf den beiden Verankerungsteilen. Die in die zylindrischen Bohrlöcher der zu verbindenden Möbelteile eingesetzten Verankerungsteile schneiden sich unter Krafteinwirkung von außen unter Drehung selbsttätig in die Wandungen der Bohrlöcher ein und garantieren einen festen Sitz im Bohrloch.

Diese Verbindungselemente besitzen eine zur vertikalen Mittelachse symmetrische Ausbildung und müsser daher vor Beginn des Zusammendrückens der zu verbindenden Möbelteile und damit vor Beginn des Einschneidens gleichmäßig auf die beiderseitigen Bohrlöcher aufgesetzt werden.. Dieses Aufsetzen der Verbindungselemente auf die Bohrlöcher muß äußerst exakt erfolgen und läßt sich bei größeren Möbelteilen, wo in der Regel mehrere Verbindungselemente erforderlich sind, nur mit Schwierigkeiten oder überhaupt nicht durchführen.

Der Erfindung liegt die Aufgabe zugrunde, Verbindungselemente der aufgezeigten Gattung so auszubilden, daß ohne das Einbringen von Leim in die beiden zylindrischen Bohrungen der zu verbindenden Teile eine leicht herstellbare dichte Verbindung erzielbar ist. Insbesondere soll ein gleichzeitiges Aufsetzen des Verbindungselements auf die beiderseitigen Bohrlöcher entfallen und beim Zusammendrücken der zu verbindenden Möbelteile eine völlig dichte Verbindung herstellbar sein und/oder über die Längsbohrung eine verbesserte Verteilung des Klebstoffs über die gesamte Länge des Verbindungselements bei verbesserter Aufquellfähigkeit erreichbar und die Stirnseiten automatengerecht so gestaltet sein, daß eine leichte und sichere Zerstörung der bereits in das zylindrische Bohrloch eines anzuschließenden Bauteils eingeführten, den Klebstoff enthaltenden flexiblen Hülle der Leimperle möglich ist.

Diese Aufgabe wird erfindungsgemäß durch die kennzeichnenden Merkmale des Anspruchs 1 gelöst. Zweckmäßige Ausgestaltungen der Erfindung ergeben sich aus den Unteransprüchen.

Bei Verwendung der erfindungsgemäßen Verbindungselemente wird äußerst schnell eine völlig dichte Verriegelungsverbindung zwischen den zu verbindenden Möbelteilen geschaffen. Die in die zylindrischen Bohrlöcher eingesetzten Verankerungsteile schneiden sich unter Krafteinwirkung von außen unter Drehung selbsttätig in die Bohrlöcher ein und garantieren einen festen Sitz im Bohrloch. Eine zusätzliche Verbindung wird durch den Klebstoff, der vorteilhafterweise in Form einer sogenannten Leimperle in das Bohrloch eingebracht ist, geschaffen. Der in einer flexiblen Hülle eingeschlossene Klebstoff wird durch Preßwirkung freigesetzt und kann sich zusätzlich über die Längs- und Querbohrungen besser im Bohrloch verteilen. Der Klebstoff dringt in die an der Stirnseite des kürzeren Verankerungsteils offene Längsbohrung ein und tritt durch die Querbohrungen an mindestens zwei Stellen der Ringnut wieder aus dem Verbindungselement aus.

Nach dem Verfahren zur Herstellung einer unsichtbaren Verbindung von Teilen unter Verwendung eines erfindungsgemäßen Verbindungselements wird zunächst das längere Verankerungsteil in die vorbereitete zylindrische Bohrung eines Werkteils eingebracht und danach ein anzuschließendes Werkteil auf das herausstehende kürzere Verankerungsteil aufgesetzt und aufgedrückt, wobei sich das Außengewinde des kürzeren Verankerungsteils in die Wandung des mit Leim oder einer Leimperle versehenen zylindrischen Bohrlochs einschneidet und sich dabei gleichzeitig das Außengewinde des bereits in das andere Bohrloch eingebrachten längeren Verankerungsteils in die Wandung einschneidet und dabei die beiden zu verbindenden Teile gegeneinander gepreßt werden. Dabei verbleibt vorteilhaterweise beim Einbringen ein solcher Teil des längeren Verankerungsteils außerhalb des Bohrlochs, wie er zum Einschneiden in die Wandung des Bohrlochs erforderlich ist.

Das erfindungsgemäße Verbindungselement kann aus beliebigen Materialien hergestellt sein, wobei sich vorteilhaft ein Material eignet, welches härter ist als das der zu verbindenden Teile, beispielsweise Metall oder Kunststoff. Das Verbindungselement ist zur Verbindung beliebiger Teile geeignet. So kann es vorteilhaft bei der Herstellung von Stühlen oder auch im Metallbau verwendet werden. Die unter Verwendung des erfindungsgemäßen Verbindungselements hergestellte Verbindung ist nicht mehr lösbar. Das Eintreten von Haarrissen ist völlig ausgeschlossen. Die Verwendung von sonst üblichen Zwingen zur Herstellung einer angestrebten dichten Verbindung ist hinfällig, da das Verbindungselement selbst
als nicht sichtbare Einwegzwinge wirkt, die im Werkteil verbleibt.

Ein wesentlicher Vorteil der Erfindung besteht darin,
daß sich beim Einbringen des kürzeren Verankerungsteils
das Außengewinde des längeren Verankerungsteils in die
unbeschädigte Wandung des Bohrlochs einschneidet, wozu
eine relativ kleine Drehbewegung ausreicht. Durch diese
relativ kleine Drehbewegung, die exakt durch die vorgegebenen Abmessungen der Steigungen der beiderseitigen
Außengewinde vorgegeben ist, werden die beiden miteinander zu verbindenden Teile gegeneinandergepreßt.

Durch die Anordnung einer durchlaufenden Längsbohrung
wird erstmalig erreicht, daß der in die zylindrische
Bohrung eines Teils eingebrachte Klebstoff in den anderen Teil überführt und dort an der Außenwandung des
Verbindungselements in Richtung der Trennfuge zwischen
den beiden Teilen verläuft. Unterstützt wird dieser
Klebstofffluß noch durch die Querbohrungen und die
keilförmig verlaufenden Leimkanäle auf der Außenseite.
Hierdurch wird der bisher zum Einbringen des Klebstoffs
in die zylindrischen Bohrlöcher der beiden miteinander
zu verbindenden Teile erforderliche Zeitaufwand um ca.
50 % reduziert. Durch die Versenkung der zum Aufstechen
der Leimperle erforderlichen Spitze in die Ebene der
Stirnseite, wodurch die Spitze nicht mehr aus der Stirnseite herausragt, kann die Spitze nicht abgebrochen
werden und sich nicht mehr in den Bohrungen benachbarter Verbindungselemente verankern, so daß eine maschinelle Einbringung des Verbindungselements in die Bohrlöcher der zu verbindenden Teile problemlos möglich ist.

Bei der Variante der Stirnseitenausbildung des Verbindungselements mit dem äußeren Ringfalz wird beim Einbringen des Verbindungselements in das zylindrische Bohrloch des anzuschließenden Teils, in dem sich bereits die Leimperle befindet, die stirnseitige Abdeckung der Leimperle nicht durchstochen, sondern durch die von dem Ringfalz umschlossene Fläche der Stirnseite an der Schweißnaht abgestanzt. Hierzu ist gegenüber dem Durchstechen ein geringerer Kraftaufwand erforderlich.

Alle Profilierungen auf der Außenseite des Mantels sind durch Materialpressung eingeprägt, ebenso auch die auf den Stirnseiten befindlichen kreisringförmigen Einprägungen. Hierdurch ist eine schnelle und umfassende Aufquellung des Verbindungselements garantiert.

Durch das Einschneiden von Zähnen oder anderen Profilierungen auf den Außengewinden entsteht eine Verhakung im Bohrloch, so daß ein Zurückdrehen oder ein Lockern des eingetriebenen Verbindungselements völlig ausgeschlossen ist.

Ausführungsbeispiele der Erfindung sind in der Zeichnung dargestellt und werden im folgenden näher beschrieben. Es zeigen:

Fig. 1    eine Ansicht eines Verbindungselements;

Fig. 2    einen Schnitt gemäß Linie A-B der Fig. 1;

Fig. 3    eine Draufsicht auf die Stirnseite des kürzeren Verankerungsteils;

Fig. 4    ein Schema der Anwendung des Verbindungselements;

Fig. 5    eine Ansicht eines Verbindungselements;

Fig. 6    eine Seitenansicht eines Gewindes;

Fig. 7    einen Längsschnitt durch ein Verbindungselement mit versenkter Spitze;

Fig. 8    eine Längsansicht eines Verbindungselements mit einem Ringfalz an der Stirnseite und

Fig. 9    eine Stirnansicht eines Verbindungselements nach Fig. 2.

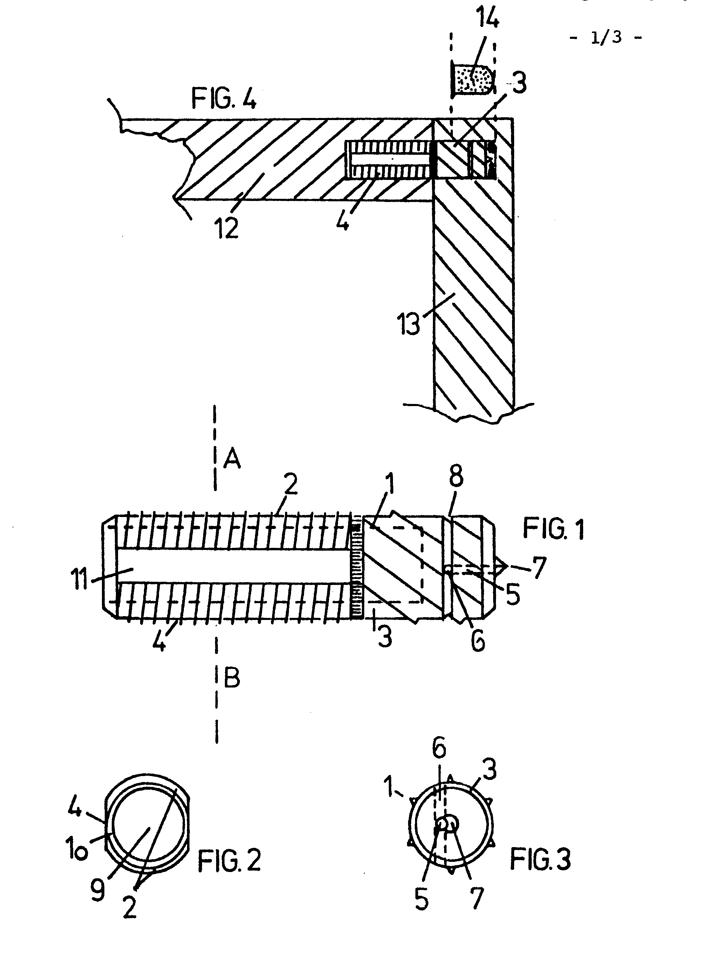

Die mehrgängigen Außengewinde 1;2 der beiden Verankerungsteile 3;4 nach Fig. 1 verlaufen zueinander gegenläufig, wobei das Außengewinde 1 des kürzeren Verankerungsteils 3 gegenüber dem Außengewinde 2 des längeren Verankerungsteils 4 eine größere Gewindesteigung aufweist. Das längere Verankerungsteil 4 ist annähernd doppelt so lang wie das kürzere Verankerungsteil 3. Die Außengewinde 1;2 verlaufen über die gesamte Länge des jeweiligen Verankerungsteils 3;4, wobei das Außengewinde 2 des längeren Verankerungsteils 4 an zwei gegenüberliegenden Seiten über die Länge des Verankerungs- teils 4 unterbrochen ist. Durch diese Gewindeunterbrechung 11 soll beim Eintreiben des längeren Verankerungsteils 4 die Wandung des Bohrlochs für das spätere Einschneiden des Gewindes 2 teilweise unbeschädigt erhalten bleiben und dadurch ein besserer Sitz im Bohrloch gewährleistet sein.

Bei der Montage eines Bodenteils 12 mit einem Seitenteil 13 eines Möbels schneiden sich gleichzeitig das Außengewinde 1 des kürzeren Verankerungsteils 3 und das Außengewinde 2 des längeren Verankerungsteils 4 in die jeweiligen Wandungen der beiderseitigen zylindrischen Bohrlöcher ein, wobei die im Bohrloch des anzuschließenden Seitenteils 13 eingelagerte Leimperle 14 zerdrückt wird und sich der freigesetzte Klebstoff durch die Drehbewegung des Verbindungselements über die Gewinderillen des kürzeren Verankerungsteils 3 bis in die Gewinderillen des längeren Verankerungsteils 4 verteilt. Diese Wirkung wird dadurch erreicht, daß die in das zylindrische Bohrloch des anzuschließenden Seitenteils eingelagerte Leimperle 14 eine dafür exakt bemessene Menge an Klebstoff enthält. Das Zerstören der Leimperle 14 wird durch die an der Stirnseite des kürzeren Verankerungsteils 3 angeordnete Spitze 7 bewirkt.

Die Verteilung des Klebstoffs wird noch dadurch gefördert, daß von der Stirnseite des kürzeren Verankerungsteils 3 aus eine Längsbohrung 5 eingebracht ist, an deren Ende eine durchgehende Querbohrung 6 angeordnet ist.
Am Austritt der Querbohrung 6 befindet sich eine umlaufende Ringnut 8, die doppelte Funktion besitzt. Über
die Ringnut 8 erfolgt eine Verteilung des über die
Längsbohrung 5 und die Querbohrung 6 transportierten
Klebstoffs. Außerdem fördert diese Ringnut 8 im beträchtlichen Umfang den festen Sitz des Verbindungselements im Bohrloch. Durch die Aufnahme der Feuchtigkeit
des Klebstoffs "wächst" das Material des Seitenteils 13,
das überwiegend aus Holz oder Spänen besteht, in die
Ringnut 8 ein, wobei nach der Aushärtung des Klebstoffs
eine Rückverformung nicht erfolgt. Dadurch ist eine Nut-
Federverbindung entstanden, die ein Zurückdrehen des
Verbindungselements ausschließt.

Das Verbindungselement wird zur Herstellung einer Verbindung zunächst mit dem längeren Verankerungsteil 4 in
das zylindrische Bohrloch des Bodenteils 12 eines Möbels
eingebracht und danach das anzuschließende Seitenteil 13
auf das herausstehende kürzere Verankerungsteil 3 aufgesetzt und aufgedrückt, wobei sich das Außengewinde 1
des kürzeren Verankerungsteils 3 in die Wandung des vorbereiteten zylindrischen Bohrlochs einschneidet und sich
dabei gleichzeitig das Außengewinde 2 des bereits in das

- 13 -

Bohrloch des Bodenteils 12 eingebrachten längeren Verankerungsteils 4 in die Wandung einschneidet und dabei die beiden zu verbindenden Teile 12;13 gegeneinandergepreßt werden. Dabei verbleibt vorteilhafterweise beim Einbringen ein solcher Teil des längeren Verankerungsteils 4 außerhalb des Bohrlochs, wie er zum Einschneiden in die unbeschädigte Wandung des Bohrlochs erforderlich ist. An sich können unabhängig von der Herstellung der endgültigen Verbindung die Verbindungselemente vorab fest in dem Bodenteil 12 verankert werden und danach ohne Schwierigkeiten das Seitenteil 13 völlig dicht angeschlossen werden.

Das Verbindungselement besitzt auf dem größten Teil seiner Länge zur Material- und Gewichtseinsparung eine innere Aussparung 9, d.h., das Verbindungselement ist auf dem größten Teil seiner Länge hohl ausgebildet. Die Aussparung 9 wird lediglich von einer Wandung 10 umschlossen. Die Aussparung 9 verläuft von der Stirnseite des längeren Verankerungsteils 4 aus bis unmittelbar an die Ringnut 8, ohne jedoch mit der Ringnut 8 in Verbindung zu stehen.

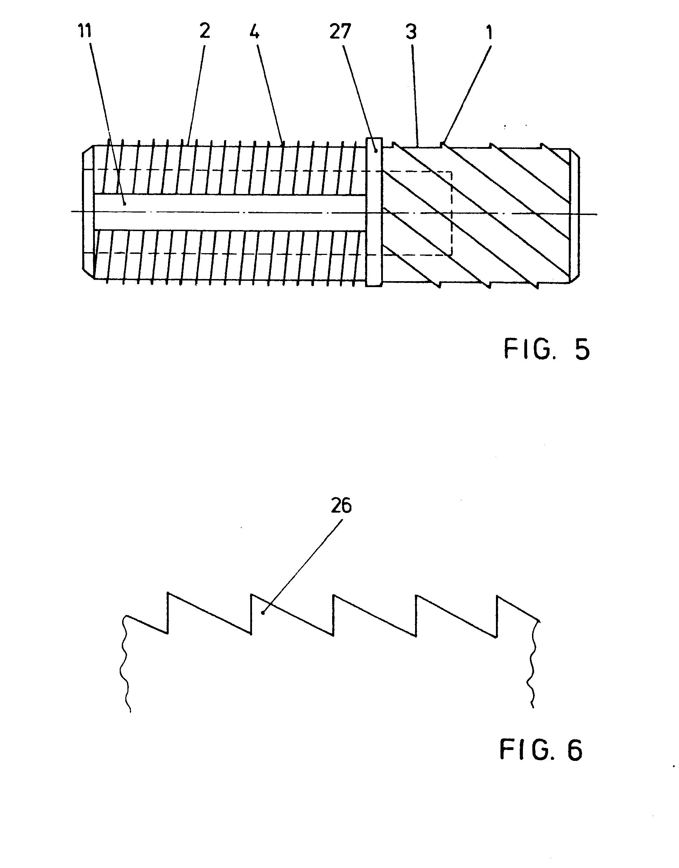

Nach Fig. 5 sind in die Außengewinde 1;2 Zähne 26 eingeschnitten, die in Form von Widerhaken ausgebildet sind. Zwischen den beiden Verankerungsteilen 3;4 ist ein umlaufender Ring 27 angeordnet. Durch die Anordnung der Zähne 26 auf den Außengewinden 1;2 läßt sich auch ohne Verwendung von Klebstoff eine äußerst dichte und dauerhafte Verbindung herstellen. Die Zähne 26 bewirken eine Verhakung im Bohrloch. Die erfindungsgemäße An-

- 14 -

ordnung der Zähne 26 auf den Außengewinden 1;2 ist nicht auf das dargestellte Ausführungsbeispiel begrenzt.

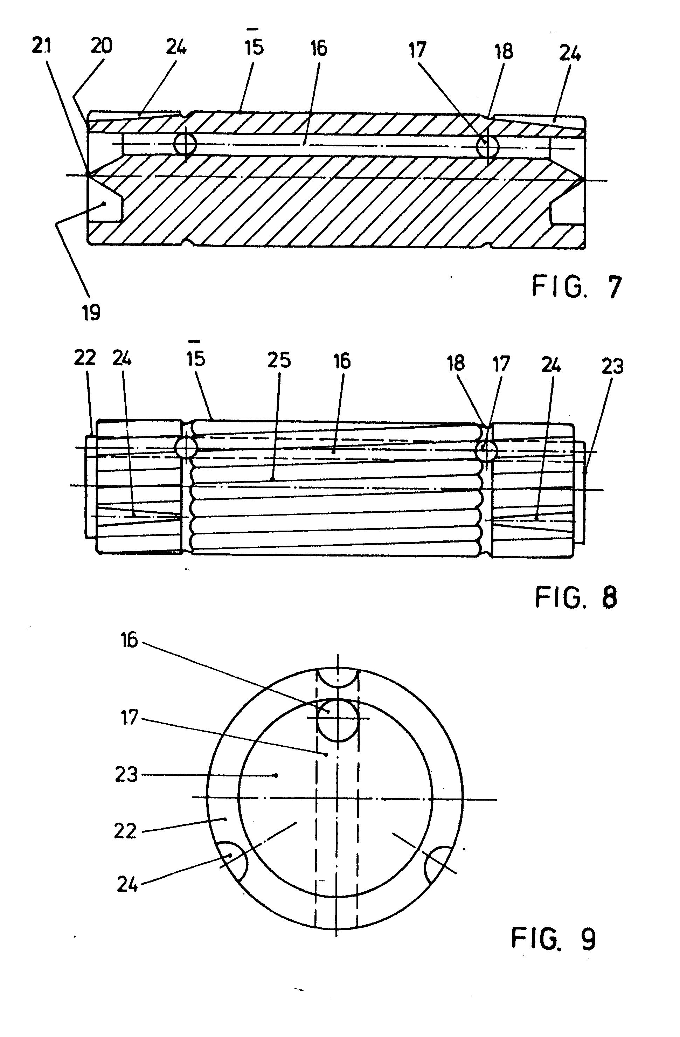

Nach Fig. 8 besitzt das Verbindungselement 1 bekannterweise auf der Außenfläche beliebige Profilierungen 25, vorzugsweise in Form von parallel längsverlaufenden Einpressungen, die rechtwinklig zur Stirnseite oder unter einem spitzen Winkel dazu verlaufen können. Die Längsbohrung 16 ist von Stirnseite zu Stirnseite durchgehend eingebracht. Gemäß Fig. 7 und Fig. 8 ist die Längsbohrung 16 durch jeweils zwei Querbohrungen 17 angeschnitten, die in einer Ringprägung 18 beginnen und enden.

An den beiden Stirnseiten des Verbindungselements 15 ist jeweils eine kreisringförmige Einprägung 19 angeordnet. Nach Fig. 7 ist die kreisringförmige Einprägung 19 von einem äußeren Rand 20 umschlossen, wobei innerhalb der kreisringförmigen Einprägung 19 eine Spitze 21 vorhanden ist. Wichtig hierbei ist, daß der die kreisringförmige Einprägung 19 umschließende äußere Rand 20 und die Spitze 21 mit ihren äußeren Begrenzungen annähernd in einer Ebene liegen, wobei die Spitze 21 nicht über den Rand 20 reichen sollte. Die Spitze 21 besitzt als "versenkte" Spitze keine Möglichkeit zur Verankerung mit den Bohrungen 16;17 benachbarter Verbindungselemente beim Sortieren und Einbringen in die zylindrischen Bohrlöcher und ist auch vor einem Abbrechen geschützt.

Bei einer Ausführung nach Fig. 8 ist die kreisringförmige Einprägung am äußeren Rand der Stirnseite in
Form eines Ringfalzes 22 angeordnet. Der Durchmesser
der von dem Ringfalz 22 umschlossenen Restfläche 23
der Stirnseite ist kleiner als der Durchmesser der
stirnseitigen Abdeckung einer mit dem Klebstoff gefüllten flexiblen Hülle einer Leimperle. Im Gegensatz
zur Anordnung einer Spitze 21 zum Durchstechen der
stirnseitigen Abdeckung einer Leimperle wird mit der
Restfläche 23 der Stirnseite des Verbindungselements 15
die Abdeckung der Leimperle an der Schweißnaht zwischen
Abdeckung und zylindrischen Hülle der Leimperle abgestanzt. Der hierzu erforderliche Kraftaufwand ist geringer als beim Durchstechen der Abdeckung.

Zur Verbesserung des Klebstoffflusses sind auf der
Außenfläche des Verbindungselements 15 drei keilförmig
verlaufende Einpressungen als Leimkanäle 24 angeordnet,
die an den Stirnseiten beginnen und in der Ringprägung
18 auslaufen.

Bei der Herstellung des Verbindungselements 15 werden
die Ringprägungen 18, die kreisringförmigen Einprägungen 19 bzw. der Ringfalz 22, die keilförmigen Leimkanäle 24 und die Profilierungen 25 durch Verdichten des
Materials hergestellt, so daß bei Aufnahme der Feuchtigkeit des Klebstoffs eine sofortige Volumenvergrößerung durch Aufquellen erfolgt und dadurch ein Preßsitz des Verbindungselements in den zylindrischen Bohrlöchern gewährleistet ist.

Durch alle am Verbindungselement 15 vorhandenen, ausschließlich durch Materialverdichtung vorgenommenen Einprägungen, nämlich die Ringprägungen 18, die stirnseitigen kreisringförmigen Einprägungen 19 bzw. 22 sowie die keilförmigen Leimkanäle 24 wird eine bisher noch nicht erreichbar gewesene Aufquellung des Verbindungselements in kürzester Zeit erreicht und damit ein fester Sitz des Verbindungselements 15 in den zylindrischen Bohrlöchern der zu verbindenden Teile gewährleistet.

- Patentansprüche -

- 17 -

Aufstellung der Bezugszeichen:

1   Außengewinde von 3

2   Außengewinde von 4

3   Verankerungsteil (kürzer)

4   Verankerungsteil (länger)

5   Längsbohrung

6   Querbohrung

7   Spitze

8   Ringnut

9   innere Aussparung

10  Wandung

11  Gewindeunterbrechung

12  Bodenteil

13  Seitenteil

14  Leimperle

15  Verbindungselement

16  Längsbohrung

17  Querbohrung

18  Ringprägung

19  kreisringförmige Einprägung

20  Rand von 5

21  Spitze

22  Ringfalz

23  Restfläche der Stirnseite

24  keilförmiger Leimkanal

25  Profilierungen

26  Zähne

27  umlaufender Ring

Anmelder:
Walter Fischer
Rationalstraße 4
4520 Melle 7

Patentansprüche:

1. Verbindungselement zur unsichtbaren Verbindung von
Teilen, insbesondere flächigen Teilen bei Möbeln,
das beidseitig in zylindrische Bohrungen der zu verbindenden Teile einführbar ist und auf der Außenseite
- zueinander gegenläufige mehrgängige Außengewinde
aufweist, wobei die mit einem Außengewinde versehenen Verankerungsteile unterschiedliche Länge
aufweisen und/oder
- eingepreßte Profilierungen aufweist, wobei von den
beiden Stirnseiten aus je eine Längsbohrung eingebracht ist, die mit einer oder mehreren durchgehenden Querbohrung(en) verbunden ist bzw. sind,
dadurch gekennzeichnet, daß
- das Außengewinde (1) des kürzeren Verankerungsteils (3) gegenüber dem Außengewinde (2) des längeren Verankerungsteils (4) eine größere Gewindesteigung aufweist und das Außengewinde (2) des längeren Verankerungsteils (4) an einer oder mehreren
Stelle(n) über die Länge des Verankerungsteils (4)
in Längsrichtung durchlaufend so unterbrochen ist,
daß längsverlaufende Außengewindeteile gebildet
sind, wobei im Querschnitt gesehen jedem Außengewindeteil ein äquivalenter Teil der Gewindeunterbrechung (11) zugeordnet ist und dabei die
Summe der verbleibenden Flächen des Außengewindes
(2) gleich oder kleiner ist als die Summe der
Flächen der Gewindeunterbrechung (11) und/oder

- die Längsbohrung (16) über die gesamte Länge des
Verbindungselements (15) durchlaufend eingebracht
ist.

2. Verbindungselement nach Anspruch 1, dadurch gekennzeichnet, daß bei Anordnung mehrerer längsverlaufender Gewindeunterbrechungen (11) die Breite der
Gewindeunterbrechungen (11) immer gleich groß ist.

3. Verbindungselement nach Anspruch 1 oder 2, dadurch
gekennzeichnet, daß die Steigungen der Außengewinde
(1;2) der beiden Verankerungsteile (3;4) und die
Gewindeunterbrechungen (11) aufeinander abgestimmt
sind, so daß beim Einbringen des kürzeren Verankerungsteils (3) in das Bohrloch des einen Teils das
bereits in dem Bohrloch des anderen anzuschließenden Teils befindliche längere Verankerungsteil (4)
eine entgegengesetzte Drehung im Bohrloch ausführt,
die annähernd der Breite eines Außengewindeteils (2)
entspricht, wobei sich das Außengewinde (2) in die
Teile der Bohrlochwandung einschneidet, die beim
Einbringen des längeren Verankerungsteils (2) nicht
von seinem Außengewinde (2) beschädigt worden sind.

4. Verbindungselement nach einem der Ansprüche 1 bis 3, dadurch gekennzeichnet, daß von der Stirnseite des kürzeren Verankerungsteils (3) aus eine Längsbohrung (5) eingebracht ist, an deren Ende eine oder mehrere durchgehende Querbohrung(en) angeordnet ist bzw. sind.

5. Verbindungselement nach einem der Ansprüche 1 bis 4, gekennzeichnet durch eine innere Aussparung (9), die lediglich von einer Wandung (10) umschlossen ist.

6. Verbindungselement nach Anspruch 5, dadurch gekennzeichnet, daß die innere Aussparung (9) von der Stirnseite des längeren Verankerungsteils (4) aus bis unmittelbar an eine Ringnut (8) verläuft, die am Austritt der Querbohrung(en) (6) umlaufend angeordnet ist.

7. Verbindungselement nach einem der Ansprüche 1 bis 6, dadurch gekennzeichnet, daß die Außengewinde (1;2) auf den äußeren Begrenzungen mit Profilierungen versehen sind.

8. Verbindungselement nach einem der Ansprüche 1 bis 7, dadurch gekennzeichnet, daß auf den Außengewinden (1;2) Zähne (26) eingeschnitten sind.

9. Verbindungselement nach einem der Ansprüche 1 bis 8, dadurch gekennzeichnet, daß die Zähne (26) in Form von Widerhaken ausgebildet sind.

10. Verbindungselement nach einem der Ansprüche 1 bis 9, dadurch gekennzeichnet, daß die Zähne (26) auf den Außengewinden (1;2) gegenläufig zueinander verlaufen.

11. Verbindungselement nach einem der Ansprüche 1 bis 10, dadurch gekennzeichnet, daß zwischen den beiden Verankerungsteilen (3;4) ein umlaufender Ring (27) angeordnet ist.

12. Verbindungselement nach einem der Ansprüche 1 bis 11, dadurch gekennzeichnet, daß die Außengewinde (1;2) der beiden Verankerungsteile (3;4) an dem umlaufenden Ring (27) enden.

13. Verbindungselement nach einem der Ansprüche 1 bis 11, dadurch gekennzeichnet, daß das Außengewinde (1) des kürzeren Verankerungsteils (3) am umlaufenden Ring (27) ausläuft.

14. Verbindungselement nach Anspruch 1, dadurch gekennzeichnet, daß an den beiden Stirnseiten eine kreisringförmige Einprägung (19) angeordnet ist.

15. Verbindungselement nach Anspruch 14, dadurch gekennzeichnet, daß die kreisringförmige Einprägung (19) von einem äußeren Rand (20) umschlossen ist.

16. Verbindungselement nach Anspruch 14 oder 15, dadurch gekennzeichnet, daß die von der kreisringförmigen Einprägung umschlossene Fläche als Spitze (21) ausgebildet ist.

17. Verbindungselement nach einem der Ansprüche 14 bis 16, dadurch gekennzeichnet, daß der die kreisringförmige Einprägung (19) umschließende äußere Rand (20) und die Spitze (21) mit ihren äußeren Begrenzungen annähernd in einer Ebene liegen.

18. Verbindungselement nach Anspruch 14 oder 15, dadurch gekennzeichnet, daß die kreisringförmige Einprägung am äußeren Rand der Stirnseite in Form eines Ringfalzes (22) angeordnet ist.

19. Verbindungselement nach Anspruch 18, dadurch gekennzeichnet, daß der Durchmesser der von dem Ringfalz (22) umschlossenen Restfläche (23) der Stirnseite kleiner ist als der Durchmesser der stirnseitigen Abdeckung einer mit Klebstoff gefüllten flexiblen Hülle einer Leimperle.

20. Verbindungselement nach einem der Ansprüche 14 bis 19, gekennzeichnet durch mehrere keilförmig verlaufende Einpressungen als Leimkanäle (24) auf der Außenfläche.

21. Verbindungselement nach Anspruch 20, dadurch gekennzeichnet, daß die keilförmigen Leimkanäle (24) an den Stirnseiten beginnen.

22. Verbindungselement nach Anspruch 20 oder 21, dadurch gekennzeichnet, daß an jeder Stirnseite mindestens ein keilförmiger Leimkanal (24) angeordnet ist.

23. Verbindungselement nach einem der Ansprüche 14 bis 22, dadurch gekennzeichnet, daß die durchgehende Längsbohrung (16) durch mehrere durchgehende Querbohrungen (17) angeschnitten ist.

24. Verbindungselement nach einem der Ansprüche 14 bis 23, dadurch gekennzeichnet, daß auf der Außenfläche mehrere Ringprägungen (18) angeordnet sind.

25. Verbindungselement nach einem der Ansprüche 14 bis 24, dadurch gekennzeichnet, daß die Querbohrungen (17) in den Ringprägungen (18) beginnen und enden.

26. Verbindungselement nach einem der Ansprüche 14 bis 25, dadurch gekennzeichnet, daß der keilförmige Leimkanal (24) bis zur nächstliegenden Ringprägung (18) verläuft.

27. Verfahren zur Herstellung einer unsichtbaren Verbindung von Teilen, insbesondere flächigen Teilen bei Möbeln unter Verwendung des Verbindungselements nach einem der Ansprüche 14 bis 26, dadurch gekennzeichnet, daß das Verbindungselement (15) zunächst in die zylindrische Bohrung des ersten Teils ohne Klebstoff eingebracht wird, danach das zweite Teil mit der mit Klebstoff versehenen zylindrischen Bohrung auf das Verbindungselement (15) aufgesetzt und angepreßt wird und dabei der Klebstoff durch die durchgehende Längsbohrung (16) des Verbindungselements (15) in die zylindrische Bohrung des ersten Teils gepreßt wird.

FIG. 4

14

3

12

4

13

A

2

1

8

FIG. 1

11

7

5

4

6

3

B

4

1o

9

2

FIG. 2

6

3

1

5

7

FIG. 3

11  2  4  27  3  1

FIG. 5

26

FIG. 6

- 3/3 -

FIG. 7

FIG. 8

FIG. 9